**Europäisches Patentamt**

**European Patent Office**

**Office européen des brevets**

(19)

(11) Veröffentlichungsnummer: **0 013 426**
**B1**

(12) **EUROPÄISCHE PATENTSCHRIFT**

(45) Veröffentlichungstag der Patentschrift: **24.08.83**

(21) Anmeldenummer: **79105378.8**

(22) Anmeldetag: **27.12.79**

(51) Int. Cl.³: **D 04 H 13/00, D 04 H 5/02**

(54) Gemustertes textiles Flächengebilde.

(30) Priorität: **09.01.79 CH 158/79**

(43) Veröffentlichungstag der Anmeldung:
**23.07.80 Patentblatt 80/15**

(45) Bekanntmachung des Hinweises auf die Patenterteilung:
**24.08.83 Patentblatt 83/34**

(84) Benannte Vertragsstaaten:
**AT BE DE FR GB IT NL SE**

(56) Entgegenhaltungen:
**BE - A - 700 540**
**FR - A - 1 519 893**
**FR - A - 2 097 217**
**FR - A - 2 299 473**

(73) Patentinhaber: **BREVETEAM S.A.**
**13, Chemin Riedlé Postfach 60**
**CH-1700 Fribourg 7 (CH)**

(72) Erfinder:
**Der Erfinder hat auf seine Nennung verzichtet**

Courier Press, Leamington Spa, England.

Gemustertes textiles Flächengebilde

Die Erfindung betrifft ein dekoratives, textiles Flächengebilde gemäss Oberbegriff des Anspruchs 1.

Bei einem bekannten textilen Flächengebilde (CH—PS 401.893) werden vorgefertigte Flächenmuster aus Fäden hergestellt und diese dann unter Vernadeln auf der Trägerschicht befestigt. Es ist nicht nur ein aufwendiger Vorprozess für die Herstellung des Flächenmusters erforderlich, sondern man ist auch nicht frei, innerhalb kurzer Zeit einen Musterwechsel vorzunehmen, ohne eine entsprechende Lagerhaltung oder Anfertigung an Flächenmustern.

Aus der BE—A 700.540 ist ein textiles Flächengebilde bekannt, bei dem eine vorgefertigte Schicht aus parallel zueinander angeordneten Fäden oder Lunten auf eine faserhaltige Schicht derart aufgenadelt wird, dass aus dieser faserhaltigen Schicht heraus Haltefasern durch die Fäden oder Lunten durchgestochen werden. Die Fäden oder Lunten liegen dabei dicht an dicht, so dass die Musterung nur durch die gegebenenfalls verschieden farbige Ausbildung der Fäden oder Lunten bestimmt wird.

Es sind auch als Bodenbeläge einsetzbare, textile Flächengebilde bekannt geworden, bei denen aus Einzelfasern gesponnene Fäden musterbildend eingesetzt werden, wobei sie auf eine Trägerschicht aus einem Fasermaterial abgelegt und von einer aktiv nadelfähigen Faserschicht überdeckt werden. Durch Vernadelung werden diese Fäden in ihrer Lage festgehalten. Obwohl die textilen Flächengebilde durch die Oberschicht hindurch Muster zeigen, können diese infolge der Deckschicht nicht in allen Fällen in ausreichend gewünschter, insbesondere ausgeprägter Musterung hergestellt werden und erfordern überdies die Verwendung der Deckschicht, was aufwendig ist.

Aus der FR—A 2.229.473 ist ein gattungsgemässes Flächengebilde bekannt. Bei diesem bekannten Flächengebilde liegt eine Schicht aus aneinanderliegenden, gedrehten Fäden vor, die nur in geringer Dichte durch Fasern der Fäden mit einer Trägerschicht vernadelt sind. Dabei ist die Trägerschicht, die aus einer Papierbahn, einem auf feuchtem Wege erhaltenen Vlies, einem Vlies aus zusammenhängenden, ausgebreiteten und genadelten Fäden, einem Film aus Polypropylen oder Polyester, einem Gewebe oder aus Tricot bestehen kann, vollständig durch die aus Fäden bestehende Schicht abgedeckt. Die gewünschte Musterung wird bei diesem bekannten Flächengebilde alleine durch die Strukturart der Fäden, d.h. durch deren Drehungsart, Noppen in den Fäden oder dergleichen oder durch weitere Fadenschichten über der ersten Fadenschicht erreicht. Bei diesen Fäden handelt es sich um gedrehte Garne, mit einem Durchmesser von mehreren Milimetern. Die Trägerschicht wird somit vollständig von den Fäden bedeckt. Auch hier ist ein Musterwechsel sehr schwierig.

Der Erfindung liegt nun die Aufgabe zugrunde, ein gattungsgemässes Flächengebilde zu schaffen, bei dem ohne eine aufwendige Vorarbeit zur Mustergebung und ohne zusätzliche Massnahmen zur Befestigung der Fäden eine gemusterte Oberfläche vorliegen soll.

Diese aufgabe wird durch den Gegenstand des Anspruches 1 gelöst. Gemäss der Erfindung ist die Trägerschicht als Kontrastträgerschicht ausgebildet und die mit dieser vernadelte Oberflächenschicht besteht aus einer Anzahl von einzelnen Endlosfilamenten, die auf der Kontrastträgerschicht in Abstand voneinander so angeordnet sind, dass die Kontrastträgerschicht durch die Zwischenräume zwischen diesen Endlosfilamenten sichtbar ist.

Es hat sich überraschenderweise gezeigt, dass bei Einsatz der bisher im Bereich Tufting und Webware verwendeten Endlosfilamente im Nadelfilzbereich ein für die Musterung geeignetes Material vorliegt, das den Wünschen nach z.B. einer ausgeprägten Struktur oder Farbmusterung gerecht wird. Man erhält z.B. eine Hoch- Tiefstruktur mit entsprechendem Griffkomfort, mit der vielseitige Musterungsmöglichkeiten erhalten werden können. Gegenüber den bekannten textilen Flächengebilden liegt auch ein preisgünstigeres Produkt vor, weil z.B. eine Vorarbeit zur Herstellung eines vorgegebenen gewünschten Flächenmusters oder die Verwendung eines aufwendig herzustellenden und daher kostspieligen gedrehten Fadens oder Garnes entfällt. Je z.B nach Art, Beschaffenheit und/oder Anforderung an das Produkt können mit einem und demselben Endlosfilamentmaterial beliebige Muster hergestellt werden. Durch die Anordnung bzw. Ablage der einzelnen Endlosfilamente, welche die Kontrastträgershicht unvollkommen abdecken, kann in vorteilhafter Weise erreicht werden, dass die Kontrastträgerschicht z.B. zwischen den Endlosfilamenten, das heisst durch die abgelegte Schicht derselben hindurch, sichtbar bleibt. Dieses kann in vielfältiger Weise erreicht werden, z.B. durch Multifilamente, gekreuzte Ablage bzw. Anordnung der Endlosfilamente oder dadurch, dass die Endlosfilamente parallel zueinander in mit Abstand voneinander angeordneten Gruppen vorliegen. In einer Ausgestaltung der Erfindung können die Endlosfilamente gefärbt sein und z.B. gegenüber der Konstrastträgerschicht eine andere Farbe besitzen, so dass auch ausgeprägte Farbmuster und/oder Farbmischungen für das textile Flächengebilde erhalten werden können. Auch können die Endlosfilamente in verschiedenen Farben vorliegen. Hierdurch sind z.B. textile Flächengebilde erreichbar, die so farbecht sein können, dass sie echter wirken als z.B. eine durch Textildruck hergestellte Musterung.

In einer weiteren Ausführungsform kann die Kontrastträgerschicht eine Faserschicht z.B. ein Vliesstoff, Gewebe oder Gewirk oder dergleichen sein. Die Kontrastträgerschicht besitzt z.B. eine grössere Dicke als die Schicht aus Endlosfilamenten, wodurch das textile Flächengebilde nach der Erfindung z.B. in vorteilhafter Weise als Bodenbelag eingesetzt werden kann. Die Endlosfilamente können auch schwach gedreht sein, was den Vorteil haben kann, dass dieselben dann für die Ablage einen besseren Zusammenhalt besitzen und die aktive Nadelfähigkeit vorhanden ist. Durch die Art der Vernadelung kann bei den textilen Flächengebilden der Eindruck überdeckt sein, dass es sich um abgelegte Endlosfilamentfäden handelt. Infolge der Endlosfilamente an der äusseren Oberfläche zeigen die textilen Flächengebilde nach der Erfindung z.B. eine geringe Abnutzung, z.B. eine hohe Abriebfestigkeit.

Das textile Flächengebilde kann z.B. als Boden- oder Wandbelag für Textilstoffe oder für Dekorationszwecke verwendet werden. Je z.B. nach Verwendungszweck oder gewünschter Musterung können die Endlosfilamente aus einem beliebigen Material bestehen, z.B. Polypropylen, Polyester oder Polyamid usw. Das einzelne Filament kann eine Feinheit z.B. im Bereich von 1000—4000 dtex aufweisen. Es können auch eine Kombination von Endlosfilamenten von verschiedener Feinheit und/oder verschiedene Arten von Endlosfilamenten vorliegen, wenn dieses für die Musterung günstig oder gewünscht ist. Je feiner z.B. das Endlosfilament ist, desto weniger Einzelfilamente, d.h. desto weniger an Gewicht der Endlosfilamente ist zur unvollkommenen Abdeckung der Kontrastträgerschicht erforderlich. Die Endlosfilamente können mit einem Auflagegewicht von z.B. etwa 200 g/m² vorliegen, um eine ausreichend gewünschte Musterung zu erreichen.

Die Endlosfilamente können texturiert, z.B. gekräuselt sein, wodurch eine zusätzliche Deckung und gute Verfestigung im Träger erreicht werden kann. Sie können aber auch alle in gleicher Weise oder unterschiedlich anfärbbar sein, so dass, wenn gewünscht, das textile Flächengebilde nach der Vernadelung z.B. zusätzlich gefärbt werden kann. Das textile Flächengebilde kann mit bekannten Tränkungen oder mit einer Beschichtung versehen werden, so dass z.B. Verbundgebilde auch für technische Zwecke mit guten Festigkeiten entstehen.

Die Erfindung ist nachstehend in Ausführungsbeispielen anhand der Zeichnung näher erläutert.

Es zeigen:

Fig. 1 ein gemustertes textiles Flächengebilde im Schnitt in schematischer Darstellung,

Fig. 2 das Flächengebilde von Fig. 1 ist in einer Ansicht von oben gemäss Pfeil A,

Fig. 3 einen Teil eines anderen gemusterten textilen Flächengebildes in einer Ansicht von oben in schematischer Darstellung und

Figs. 4 und 5 je ein weiteres gemustertes textiles Flächengebilde in Ansicht von oben in schematischer Darstellung.

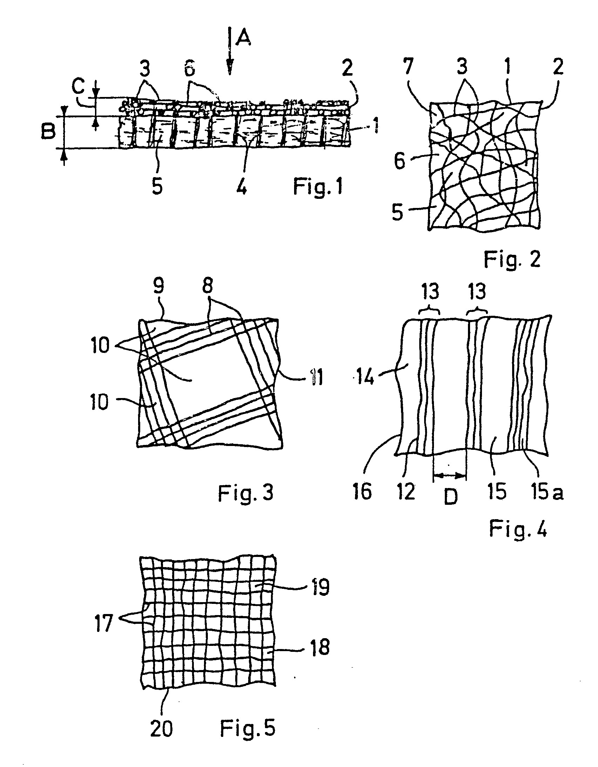

Ein textiles Flächengebilde 1 besteht gemäss Fig. 1 und 2 aus einer Schicht 2 aus einzelnen aktiv nadelfähigen Endlosfilamenten 3, die durch Vernadelung mittels aus den Filamenten von den Nadeln herausgestossenen Haltefasern 4 auf einer Kontrastträgerschicht 5 befestigt sind. Die Kontrastträgerschicht 5 besitzt eine Dicke B, die grösser ist als eine Dicke C der Schicht 2. Die Endlosfilamente 3 sind auf der Kontrastträgerschicht 5 in z.B. einer Art von Wirrlage unter Ausbildung bzw. Verbleib von Zwischenräumen 6 abgelegt und befestigt, so dass die Kontrastträgerschicht 5 von denselben unvollkommen abgedeckt ist und wie Fig. 2 insbesondere zeigt an der Oberfläche 7 des textilen Flächengebildes 1 deutlich durchscheint und daher in dem Zwischenräumen 6 sichtbar ist. Das Flächengebilde 1 besitzt daher auf seiner äusseren Oberfläche eine der Ablage der Endlosfilamente 3 und der durchscheinenden Kontrastträgerschicht 5 entsprechende Musterung.

Nach Fig. 3 sind Endlosfilamente 8 z.B. kreuzweise in einem Karré auf einer Kontrastträgerschicht 9 abgelegt, so dass zwischen denselben Zwischenräume 10 verbleiben, durch welche die Kontrastträgerschicht 9 durchscheint, und ein geometrisch gemustertes textiles Flächengebilde 11 gebildet ist. Die Endlosfilamente 9 sind wiederum z.B. wie in dem vorbeschriebenen Ausführungsbeispiel nach Fig. 1 und 2 durch Vernadeln (nicht gezeigt) auf der Kontrastträgerschicht 9 befestigt.

Nach Fig. 4 sind Endlosfilamente 12 parallel in Gruppen oder Bündeln 13 auf einer Kontrastträgerschicht 14 durch Vernadeln (nicht gezeigt) befestigt. Die Bündel 13 sind mit einem Abstand D voneinander abgelegt bzw. angeordnet, so dass die Kontrastträgerschicht 14 durch Zwischenräume 15 zwischen den Bündeln 13 und auch in Zwischenräumen 15a zwischen den Endlosfilamenten 13 sichtbar ist, und ein textiles Flächengebilde 16 mit einer Musterung entsprechend der Bündelstruktur gebildet ist.

Wie Fig. 5 noch ziegt, ist es auch möglich, einzelne Endlosfilamente 17 auf einer Kontrastträgerschicht 18 in Form eines Gitternetzes abzulegen und auf derselben wie z.B. nach der vorbeschriebenen Ausführungsform nach Fig. 1 und 2 durch Vernadeln zu befestigen (nicht gezeigt). Durch die Gitteröffnungen 19 ist widerum die Kontrastträgerschicht 17 sichtbar, so dass ein entsprechend gemustertes textiles Flächengebilde 20 vorliegt. Bei solcher Anordnung kann auch gleichzeitig eine gewünschte Fadenverstärkung bewirkt werden.

**Patentansprüche**

1. Dekoratives, textiles Flächengebilde (1, 11, 16, 20), insbesondere Boden- oder Wandbelagmaterial, mit einer faserhaltigen Trägerschicht und einer mit dieser vernadelten, die Oberfläche des Flächengebildes bildenden Schicht aus in Form eines Musters angeordneten, aktiv nadelfähigen Fäden, dadurch gekennzeichnet, dass die Trägerschicht als Kontrastträgerschicht (5, 9, 14, 18) ausgebildet ist und die mit dieser vernadelte Oberflächenschicht (2) aus einer Anzahl von einzelnen Endlosfilamenten (3, 8, 12, 17) besteht, die auf der Kontrastträgerschicht in Abstand voneinander so angeordnet sind, dass die Kontrastträgerschicht durch die Zwischenräume (6, 10, 15, 15a, 19) zwischen diesen Endlosfilamenten sichtbar ist.

2. Flächengebilde nach Anspruch 1, dadurch gekennzeichnet, dass die äussere, unvollkommen deckende Oberflächenschicht (2) Multifilamente enthält.

3. Flächengebilde nach Anspruch 1, dadurch gekennzeichnet, dass die Endlosfilamente (3, 8, 12, 17) miteinander gekreuzt angeordnet sind.

4. Flächengebilde nach Anspruch 1, dadurch gekennzeichnet, dass die Endlosfilamente (3, 8, 12, 17) parallel zueinander in mit Abstand voneinander angeordneten Gruppen vorliegen.

5. Flächengebilde nach einem der vorhergehenden Ansprüche, dadurch gekennzeichnet, dass die Endlosfilamente (3, 8, 12, 17) gefärbt sind.

6. Flächengebilde nach Anspruch 5, dadurch gekennzeichnet, dass die Endlosfilamente (3, 8, 12, 17) und die Kontrastträgerschicht (5, 9, 14, 18) voneinander verschiedene Farben aufweisen.

7. Flächengebilde nach einem der vorhergehenden Ansprüche, dadurch gekennzeichnet, dass die Endlosfilamente (3, 8, 12, 17) schwach gedreht sind.

8. Flächengebilde nach einem der vorhergehenden Ansprüche, dadurch gekennzeichnet, dass die Kontrastträgerschicht (5, 9, 14, 18) eine grössere Dicke besitzt, als die Schicht (2) aus Endlosfilamenten (3, 8, 12, 17).

9. Flächengebilde nach einem der vorhergehenden Ansprüche, dadurch gekennzeichnet, dass die Endlosfilamente (3, 8, 12, 17) voneinander verschieden gefärbt sind.

10. Flächengebilde nach einem der vorhergehenden Ansprüche, dadurch gekennzeichnet, dass an der äusseren Oberfläche (7) des Flächengebildes (1, 11, 16, 20) eine Hoch-Tiefstruktur vorliegt.

11. Flächengebilde nach einem der vorhergehenden Ansprüche, dadurch gekennzeichnet, dass die Oberflächenschicht (2) durch Vernadeln mittels aus den Endlosfilamenten (3, 8, 12, 17) herausgestossener Haltefasern (4) auf der Kontrastträgerschicht (5, 9, 14, 18) befestigt ist.

**Revendications**

1. Produit superficiel textile décoratif (1, 11, 16, 20), en particulier matériel de revêtement de mur ou de sol, comportant und couche de soutien fibreuse et une couche aiguilletée à celle-ci, formant la surface du produit superficiel et se composant de fils aptes activement à l'aiguilletage, arrangés sous la forme d'un motif, caractérisé en ce que la couche de soutien est conçue comme une couche de soutien contrastante (5, 9, 14, 18) et en ce que la couche de surface (2) aiguilletée à celle-ci est constituée d'un nombre de différents filaments sans fin (3, 8, 12, 17) qui sont disposés sur la couche de soutien contrastante à une distance les uns des autres, de façon que cette couche de soutien contrastante soit visible par les espaces intermédiaires (6, 10, 15, 15a, 19) entre ces filaments sans fin.

2. Produit superficiel selon la revendication 1, caractérisé en ce que la couche de surface extérieure (2), recouvrante imparfaitement, contient des multifilaments.

3. Produit superficiel selon la revendication 1, caractérisé en ce que les filaments sans fin (3, 8, 12, 17) sont disposés en croix entre eux.

4. Produit superficiel selon la revendication 1, caractérisé en ce que les filaments sans fin (3, 8, 12, 17) sont présents, parallèlement entre eux, en groupes disposés à une distance les uns des autres.

5. Produit superficiel selon l'une quelconque des revendications 1 à 4, caractérisé en ce que les filaments sans fin (3, 8, 12, 17) sont colorés.

6. Produit superficiel selon la revendication 5, caractérisé en ce que les filaments sans fin (3, 8, 12, 17) et la couche de soutien contrastante (5, 9, 14, 18) présentent des couleurs différentes les unes des autres.

7. Produit superficiel selon l'une quelconque des revendications 1 à 6, caractérisé en ce que les filaments sans fin (3, 8, 12, 17) sont faiblement torsadés.

8. Produit superficiel selon l'une quelconque des revendications 1 à 7, caractérisé en ce que la couche de soutien contrastante (5, 9, 14, 18) a une épaisseur plus grande que la couche (2) de filaments sans fin (3, 8, 12, 17).

9. Produit superficiel selon l'une quelconque des revendications 1 à 8, caractérisé en ce que les filaments sans fin (3, 8, 12, 17) sont colorés différemment les uns des autres.

10. Produit superficiel selon l'une quelconque des revendications 1 à 9, caractérisé en ce qu'une structure haute et basse est présente sur la surface extérieure (7) du produit superficiel (1, 11, 16, 20).

11. Produit superficiel selon l'une quelconque des revendications 1 à 10, caractérisé en ce que la couche de surface (2) est fixée par aiguilletage sur la couche de soutien contrastante (5, 9, 14, 18) au moyen de fibres de retenue (4) refoulées à partir des filaments sans fin (3, 8, 12, 17).

**Claims**

1. Decorative flat textile fabric (1, 11, 16, 20), especially a floor- or wall-covering material, with a fibre-containing supporting layer or substrate and a layer needled to the substrate and forming the surface of the fabric, the layer being of active needlable threads arranged in the form of a pattern, characterised in that the substrate is in the form of a contrasting supporting layer (5, 9, 14, 18) and the surface layer (2) needled to it comprises a number of individual endless filaments (3, 8, 12, 17) which are so arranged, spaced apart on the contrasting supporting layer that the contrasting supporting layer is visible through the gaps (6, 10, 15, 15a, 19) between these endless filaments.

2. Flat fabric according to claim 1 characterised in that the outer incompletely covering surface layer (2) contains multiple filaments.

3. Flat fabric according to claim 1 characterised in that the endless filaments (3, 8, 12, 17) cross over one another.

4. Flat fabric according to claim 1 characterised in that the endless filaments (3, 8, 12, 17) lie parallel to one another in groups which are spaced apart.

5. Flat fabric according to one of the foregoing claims characterised in that the endless filaments (3, 8, 12, 17) are coloured.

6. Flat fabric according to claim 5 characterised in that the endless filaments (3, 8, 12, 17) and the contrasting supporting layer (5, 9, 14, 18) are of mutually different colours.

7. Flat fabric according to one of the foregoing claims characterised in that the endless filaments (3, 8, 12, 17) are lightly twisted.

8. Flat fabric according to one of the foregoing claims characterised in that the contrasting supporting layer (5, 9, 14, 18) is of greater thickness than the layer (2) of endless filaments (3, 8, 12, 17).

9. Flat fabric according to one of the foregoing claims characterised in that the endless filaments (3, 8, 12, 17) are of different colours from one another.

10. Flat fabric according to one of the foregoing claims characterised in that a relief structure is present on the outer surface (7) of the fabric (1, 11, 16, 20).

11. Flat fabric according to one of the foregoing claims characterised in that the surface layer (2) is secured to the contrasting supporting layer (5, 9, 14, 18) by needling by means of retaining fibres (4) pulled out of the endless filaments (3, 8, 12, 17).

Fig. 1

Fig. 2

Fig. 3

Fig. 4

Fig. 5